# EUROPÄISCHE PATENTSCHRIFT

(11) **EP 1 216 374 B1**
(45) Veröffentlichungstag und Bekanntmachung des Hinweises auf die Patenterteilung: **21.05.2003**
(21) Anmeldenummer: 00979378.7
(22) Anmeldetag: 25.09.2000
(51) Int. Cl.: F16K 27/00, F16K 31/06

(54) **AUFBAU ZUM ELEKTRISCHEN KONTAKTIEREN EINES VENTILS**
CONSTRUCTION FOR ELECTRICALLY CONTACTING A VALVE
ENSEMBLE SERVANT A ASSURER LA MISE EN CONTACT ELECTRIQUE D'UNE SOUPAPE

(30) Priorität: 28.09.1999 DE 19946438
(43) Veröffentlichungstag der Anmeldung: 26.06.2002
(73) Patentinhaber: SIEMENS AKTIENGESELLSCHAFT, 80333 München (DE)
(72) Erfinder: LOIBL, Josef, 94209 Regen (DE); SCHEUERER, Ulf, 93047 Regensburg (DE)
(86) Internationale Anmeldenummer: DE0003321
(87) Internationale Veröffentlichungsnummer: WO01023793

(56) Entgegenhaltungen:
- DE-A- 4 324 781
- US-A- 3 815 077
- US-A- 5 038 125

## Beschreibung

Die Erfindung betrifft einen Aufbau zum elektrischen Kontaktieren eines elektrischen Ventils, insbesondere Schalt- oder Druckregelventils für Automatikgetriebe von Kraftfahrzeugen, mit einem elektrischen Verdrahtungselement, nach dem Oberbegriff von Anspruch 1.

In einem Automatikgetriebe werden hydraulische Einrichtungen durch elektrische Ventile angesteuert. Da die Ventile erst bei der Endmontage in das Getriebe integriert werden, erfolgt ihre Anbringung üblicherweise mittels Steckbefestigungen, die an geeigneter Stelle innerhalb des Getriebes vorgesehen sind.

Bei einem derartigen Aufbau besteht eine Schwierigkeit darin, eine sichere und langzeitstabile elektrische Kontaktierung des elektrischen Ventils zu erreichen. Die Anforderungen an die Kontaktierungssicherheit sind in der Praxis ausgesprochen hoch, da in dem Getriebe einerseits extreme Umweltbedingungen (Temperaturen zwischen -40°C und 140°C, Vibrationsbeschleunigungen bis 33 g) herrschen und andererseits (aufgrund von hohen Reparaturkosten und gegebenenfalls Personengefährdung im Falle eines Ausfalls) höchste Zuverlässigkeitsanforderungen einzuhalten sind.

Ein weiterer Aspekt, der mit der Kontaktierung des elektrischen Ventils in engem Zusammenhang steht, betrifft die Realisierung der elektrischen Zuleitungen für das elektrische Ventil. Es werden kostengünstige Zuleitungskonzepte angestrebt, die eine optimale Entflechtung und Anordnung einzelner Leiter innerhalb des Getriebes gestatten.

In der deutschen Patentanmeldung DE 42 33 783 A1 ist ein Magnetventil beschrieben, das beim Einsetzen in ein Befestigungselement über eine Eintauchkontaktierung mit einem Ende eines in dem Befestigungselement verlaufenden Verdrahtungselements verbunden wird. Das Verdrahtungselement steht an seinem anderen Ende mit einem Kontaktstift eines Steckers in Verbindung, welcher an der Oberseite des Befestigungselements realisiert ist. Der gesamte Aufbau ist aufwendig und außerdem erfüllt die Eintauchkontaktierung nicht immer die in der Praxis gestellten Anforderungen an die Kontaktierungssicherheit.

In der deutschen Patentanmeldung DE 43 24 781 A1 ist ein weiteres steckbares Elektromagnetventil beschrieben. Die an der Außenseite des Ventilkörpers angebrachten elektrischen Anschlüsse sind als Federkontakte ausgeführt. Die elektrische Kontaktierung erfolgt mittels eines in Steckrichtung orientierten Kontaktstiftes des Federelements, welcher mit seiner Stirnseite unter definiertem Druck auf einen Gegenkontakt aufdrückt.

In der den nächstliegenden Stand der Technik darstellenden Druckschrift US 5,038,125 ist ein Ventilblock für eine schlupfgeregelte hydraulische Bremsanlage beschrieben. Ein Leiterbahnträger mit einer integralen Ringdichtung erstreckt sich in den Innenbereich des Ventilkörpers. Zur Kontaktierung der Ventilspule steht dort eine Kontaktfeder mit einem gebogenen Anlagebereich in Kontakt mit einer freiligenden Leiterbahn des Leiterbahnträgers.

Der Erfindung liegt die Aufgabe zugrunde, einen Aufbau zum elektrischen Kontaktieren eines elektrischen Ventils zu schaffen, der aufgrund der verwendeten Kontaktierungsmaterialien dauerhaft ein hohes Maß an Kontaktierungssicherheit gewährleistet.

Diese Aufgabe wird durch die Merkmale des Anspruchs 1 gelöst.

Durch einen verzinnten Andruckabschnitt der Anlagefläche und eine verzinnten Gegenfläche des Gegenkontaktelements wird eine verschleißarme Kontaktstelle realisiert, die eine störsichere und zuverlässige Funktionsweise des elektrischen Ventils gewährleistet. Die geforderte Kontaktqualität kann dadurch für einen ausreichend langen Zeitraum (Lebensdauer des Getriebes) erhalten bleiben.

Mit dieser Materialpaarung wurden bei Tests die besten Ergebnisse bezüglich des elektrischen Übergangswiderstands erhalten.

Die Anlagefläche kann sowohl in Form einer Kugeifläche als auch einer Zylindermantelfläche realisiert sein.

Vorzugsweise weist das Kontaktfederelement einen bogenförmig verlaufenden Andruckabschnitt auf, dessen Außenseite die Anlagefläche bildet.

Eine besonders bevorzugte Ausgestaltung der Erfindung kennzeichnet sich dadurch, daß das Verdrahtungselement eine flexible Leiterplatte ist. Aufgrund des geringen Verschleißes im Bereich der Kontaktstelle kann das Gegenkontaktelement in diesem Fall als einfache Oberflächenmetallisierung einer Leiterbahn der Leiterplatte realisiert sein. Die durch die Erfindung ermöglichte Verwendung einer flexiblen Leiterplatte ist unter Kostengesichtspunkten vorteilhaft und erweist sich besonders dann als günstig, wenn im Rahmen eines Getriebeinternen Gesamt-Verbindungskonzeptes weitere mechatronische Komponenten (Aktoren, Sensoren, Steuerelektronik, usw.) mittels der flexiblen Leiterplatte elektrisch angebunden werden sollen.

Bei einem Krümmungsradius der rundförmigen Anlagefläche von etwa 1,2 bis 1,7 mm werden besonders gute Kontakteigenschaften erreicht.

Ein günstiger Bereich für die auf das Gegenkontaktelement ausgeübte Federkraft liegt zwischen 12 und 15 N. Eine in diesem Bereich liegende Kraft ist einerseits für eine sichere Kontaktierung ausreichend groß und führt andererseits noch nicht zu relevanten Beschädigungen des Gegenkontaktelements.

Durch eine Strukturierung der Anlagefläche und/oder durch das Vorsehen von über die Anlagefläche vorstehenden Verhakungsorganen kann eine reibende Bewegung der Anlagefläche auf der Gegenanlagefläche wirkungsvoll unterbunden werden.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung beschrieben; in dieser zeigt:
- Fig. 1: eine schematische Schnittdarstellung eines in einem Befestigungskörper eingesetzten Elektromagnetventils mit einem eine flexible Leiterplatte kontaktierenden Kontaktfederelement;
- Fig. 2A: eine Längsschnittdarstellung eines gegenüber dem in Fig. 1 dargestellten Kontaktfederelement leicht abgewandelten weiteren Kontaktfederelements nach der Erfindung;
- Fig. 2B: eine Seitenansicht des in Fig. 2A dargestellten Kontaktfederelements; und
- Fig. 2C: eine Einzelheit der Fig. 2B.

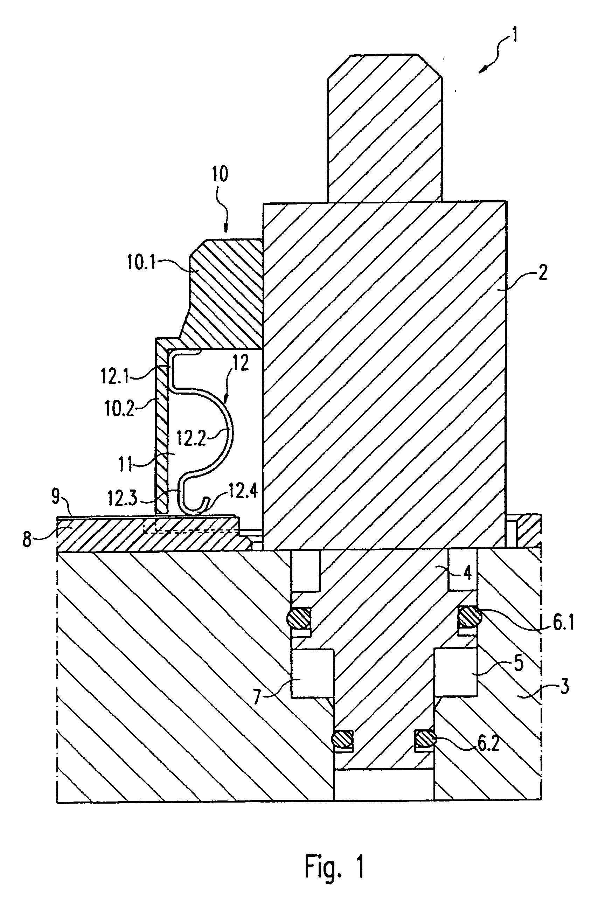

Nach Fig. 1 weist ein Elektromagnetventil 1 einen zylindrischen Ventilkörper 2 auf, welcher über eine nicht näher dargestellte Steckbefestigungsanbringung im Bodenbereich mit einem Befestigungskörper 3 einer im Getriebe befindlichen Baugruppe gekoppelt ist. In dem Elektromagnetventil 1 ist (in ebenfalls nicht dargestellter Weise) eine axial orientierte Magnetspule vorgesehen, deren Spulenloch von einem Magnetanker durchsetzt ist. Der Magnetanker ist bewegungsmäßig mit einem Kolbenelement 4 gekoppelt, das den Ventilkörper 2 bodenseitig verläßt und in einem Zylinderraum 5 des Befestigungskörpers 3 abdichtend längsverschieblich aufgenommen ist. Das Kolbenelement 4 und der Zylinderraum 5 definieren eine Druckkammer 7, deren Dichtigkeit durch Ringdichtungen 6.1 und 6.2 gewährleistet wird. Die Druckkammer 7 ist mit einem Druckfluid gefüllt und steht über Druckfluidkanäle mit einer hydraulisch betätigbaren Getriebeschaltmechanik (nicht dargestellt) in Verbindung.

Auf der Oberseite des Befestigungskörpers 3 erstreckt sich ein aus Kunststoff gefertigtes Trägerelement 8. Dieses wiederum trägt an seiner Oberseite eine flexible Leiterplatte 9. Die flexible Leiterplatte 9 realisiert ein integrales elektrisches Verdrahtungselement, über welches eine Vielzahl von weiteren innerhalb des Getriebes verteilt angeordneten elektronischen oder elektromechanischen Baugruppen (z.B. Getriebe-Steuergerät, Aktoren, Sensoren) elektrisch miteinander verbunden sind. Das Trägerelement 8 dient dabei zur Abstützung und definierten Wegführung der flexiblen Leiterplatte 9 im Getriebeinnenraum.

Das Trägerelement 8 ist optional, d.h. die flexible Leiterplatte 9 kann auch direkt auf der Oberseite des Befestigungskörpers 3 aufliegen.

An der Außenwand des Ventilkörpers 2 ist ein Kontaktgehäuse 10 aus Kunststoff angebracht. Das Kontaktgehäuse 10 weist einen Deckenabschnitt 10.1 und eine Seitenwand 10.2 auf. Die Umfangswandung des Ventilkörpers 2, der Deckenabschnitt 10.1 und die Seitenwand 10.2 des Kontaktgehäuses 10 umgrenzen einen Kontaktraum 11, in welchem bodenseitig die flexible Leiterplatte 9 hineinragt.

Der Kontaktraum 11 ist im Fußbereich nicht öldicht abgeschlossen, so daß ein Eindringen/Austreten von Getriebeöl in den/aus dem Kontaktraum 11 möglich ist. Jedoch realisiert die Seitenwand 10.2 einen wirkungsvollen Schutz gegen das Eindringen von Metallspänen in den Kontaktraum 11.

In dem Kontaktraum 11 ist ein Kontaktfederelement 12 untergebracht. Das Kontaktfederelement 12 ist mit einem oberen Abschnitt (nicht erkennbar) in dem Deckenabschnitt 10.1 des Kontaktgehäuses 10 verankert. Der obere Abschnitt des Kontaktfederelements 12 steht in ebenfalls nicht näher dargestellter Weise mit einer elektrischen Durchführung in Verbindung, die sich von dem Deckenabschnitt 10.1 durch die Wandung des Ventilkörpers 2 hindurch erstreckt und das Kontaktfederelement 12 elektrisch mit der Magnetspule verbindet.

An dem oberen Befestigungsabschnitt des Kontaktfederelements 12 schließt sich ein Winkelabschnitt 12.1 an. Die beiden Schenkel des Winkelabschnitts 12.1 sind unter 90° zueinander orientiert und liegen mit ihrer Außenfläche an der Innenwandung des Kontaktgehäuses 10 im Übergangsbereich von dem Deckenabschnitt 10.1 zu der Seitenwand 10.2 an.

An den Winkelabschnitt 12.1 des Kontaktfederelements 12 schließt sich ein Kreissegmentabschnitt 12.2 an. Der Kreissegmentabschnitt 12.2 erstreckt sich in dem hier dargestellten vorgespannten Zustand nahezu über 180° und geht mittels einer Umbiegung in einen in Axialrichtung des Ventils 1 verlaufenden Übergangsabschnitt 12.3 über. Das untere Ende des Kontaktfederelements 12 wird durch einen bogen- oder kufenförmig verlaufenden Andruckabschnitt 12.4 realisiert. Das Kontaktfederelement weist somit einen S-förmigen Abschnitt auf.

### Die Wirkungsweise des Kontaktfederelements 12 ist wie folgt:

Beim Einsetzen des Elektromagnetventils 1 in den Befestigungskörper 3 gelangt die Außenfläche des bogenförmigen Andruckabschnitts 12.4 des Kontaktfederelements 12 mit der Oberfläche der flexiblen Leiterplatte 9 in Kontakt. Dabei wird der Kreissegmentabschnitt 12.2 um einen konstruktiv vorgegebenen Weg deformiert oder komprimiert, wodurch gemäß dem Hook'schen Gesetz eine entsprechende Federkraft erzeugt wird.

Die Federkraft kann durch Materialwahl und Dimensionierung der Kontaktfeder 12 unter Berücksichtigung der genauen Einbaulage des Elektromagnetventils 1 exakt vorgegeben werden und beträgt 12 bis 15 N, vorzugsweise 14 N. Es hat sich gezeigt, daß eine solche Andruckkraft in Kombination mit dem erfindungsgemäßen bogenförmigen Andruckabschnitt 12.4 optimal ist, um einerseits auch beim Auftreten von starken Vibrationen noch einen sicheren elektrischen Kontakt zu garantieren und um andererseits zu vermeiden, daß mit der Zeit eine Beschädigung der flexiblen Leiterplatte im Kontaktbereich auftritt. Dabei ist entscheidend, daß die äußere Fläche des bogenförmigen Andruckabschnitts 12.4 im Bereich ihrer Anlage an das Gegenkontaktelement einen abgerundeten, kantenfreien Verlauf aufweist.

Die Außenfläche des Andruckabschnitts 12.4 kann unmittelbar auf einer freiliegenden Oberfläche einer Leiterbahn (z.B. aus Kupfer) aufliegen. Günstiger ist es jedoch, wenn als Gegenkontaktelement eine Metallisierung (Kontaktpad) auf der Leiterbahn angebracht ist. Hervorragende mechanische und elektrische Kontaktierungseigenschaften werden mit einem Kontaktpad aus Zinn und einer verzinnten Außenfläche (Anlagefläche) des Andruckabschnitts 12.4 erreicht.

Die Anlagefläche des Andruckabschnitts 12.4 kann mit einer leichten Prägung oder Strukturierung versehen sein, die die Lagestabilität des Andruckabschnitts 12.4 auf dem Gegenkontaktelement erhöht.

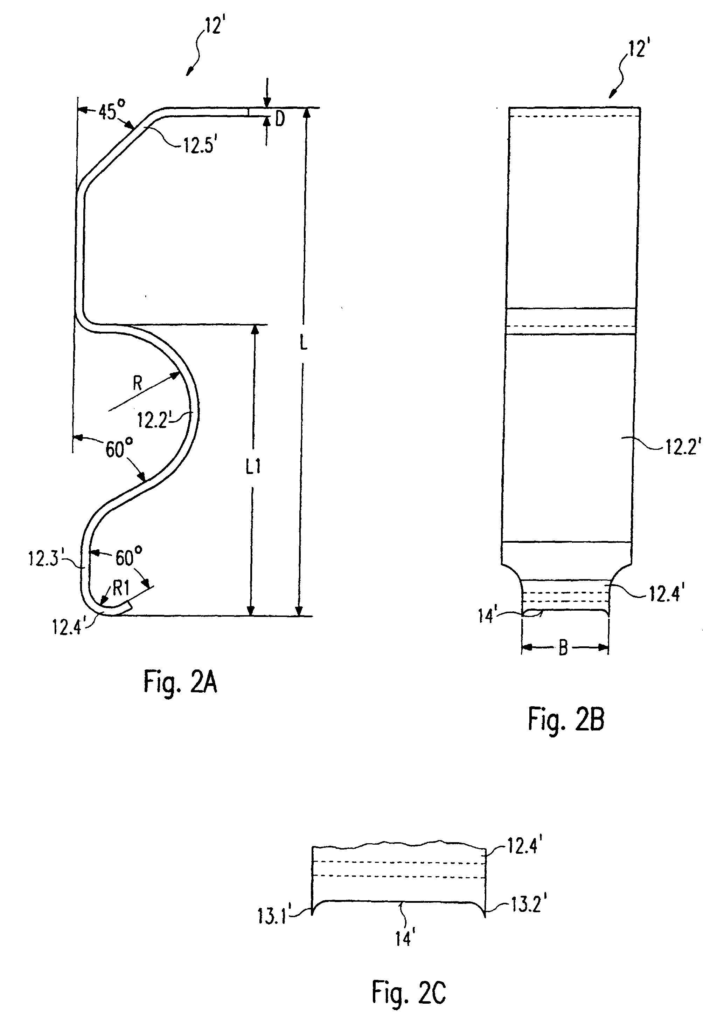

In den Fig. 2A und 2B ist ein Kontaktfederelement 12' dargestellt, das sich von dem in Fig. 1 gezeigten Kontaktfederelement 12 lediglich im oberen Bereich (Winkelabschnitt 12.1) durch Hinzufügung eines unter 45° gegenüber der Axialrichtung geneigt verlaufenden Neigungsabschnitts 12.5' unterscheidet. Das Kontaktfederelement 12' weist eine Dicke D von 0,4 mm und eine Gesamtlänge L von 25,2 mm im entspannten Zustand auf. Der Radius des Kreissegmentabschnitts 12.2' beträgt 4 mm und geht unter einem Winkel von 60° in den Übergangsabschnitt 12.3' über.

Der Radius R1 des bogenförmigen Andruckabschnitts 12.4' beträgt 1,4 mm und liegt vorzugsweise in einem Bereich zwischen 1,2 und 1,7 mm. Der bogenförmige Verlauf des Andruckabschnitts 12.4' kann ebenfalls einen Winkel von 60° einschließen. Vom Anfang des Kreissegmentabschnitts 12.2' bis zum Scheitelpunkt des Andruckabschnitts 12.4' kann ein Maß L1 = 14,5 mm vorgesehen sein.

Fig. 2B macht deutlich, daß das Kontaktfederelement 12' im Bereich des Andruckabschnitts 12.4' eine geringere Breite als im übrigen Bereich aufweisen kann. Die Breite B des Andruckabschnitts 12.4' (sowie der Anlagefläche 14') beträgt z.B. 4 mm.

Fig. 2C zeigt den unteren Bereich des Andruckabschnitts 12.4' mit der Anlagefläche 14' im Detail. Die Anlagefläche 14' ist glattflächig ausgebildet und weist an ihren seitlichen Rändern vorstehende Haken oder Krallen 13.1', 13.2' auf, die sich etwas in die Gegenanlagefläche (nicht dargestellt) eingraben und ein Rutschen der Anlagefläche 14' auf der Gegenanlagefläche unterbinden.

## Patentansprüche

1. Aufbau zum elektrischen Kontaktieren eines elektrischen Ventils (1), insbesondere Schalt- oder Druckregelventils für Automatikgetriebe von Kraftfahrzeugen, mit einem elektrischen Verdrahtungselement (9), bei welchem
- das elektrische Ventil (1) mit wenigstens einem außerhalb des Ventilgehäuses (2) angeordneten Kontaktfederelement (12, 12') ausgerüstet ist, welches im montierten Zustand ein freiliegendes Gegenkontaktelement des Verdrahtungselements (9) unter Federdruck beaufschlagt, und
- das Kontaktfederelement (12, 12') einen Andruckabschnitt (12.4, 12.4') mit einer rundförmigen Anlagefläche (14') aufweist,
**dadurch gekennzeichnet,**
- **daß** der Andruckabschnitt (12.4, 12.4') eine verzinnte Anlagefläche (14') aufweist, und
- **daß** das Gegenkontaktelement eine verzinnte Gegenanlagefläche aufweist.

2. Aufbau nach Anspruch 1,
**dadurch gekennzeichnet,**
- **daß** der Andruckabschnitt (12.4, 12.4') des Kontaktfederelements (12, 12') bogenförmig ausgebildet ist.

3. Aufbau nach Anspruch 1 oder 2,
**dadurch gekennzeichnet,**
- **daß** das Kontaktfederelement (12, 12') einen S-förmigen Abschnitt aufweist.

4. Aufbau nach einem der vorhergehenden Ansprüche,
**dadurch gekennzeichnet,**
- **daß** das Verdrahtungselement eine flexible Leiterplatte (9) ist.

5. Aufbau nach einem der vorhergehenden Ansprüche,
**dadurch gekennzeichnet,**
- **daß** die rundförmige Anlagefläche (14') einen Radius von etwa 1,2 bis 1,7 mm aufweist.

6. Aufbau nach einem der vorhergehenden Ansprüche,
**dadurch gekennzeichnet,**
- **daß** die auf das Gegenkontaktelement ausgeübte Federkraft zwischen 12 und 15 N beträgt.

7. Aufbau nach einem der Ansprüche 2 bis 5,
**dadurch gekennzeichnet,**
- **daß** der Andruckabschnitt (12.4, 12.4') eine parallel zur Bogenachse gemessene Breite von etwa 3 bis 5 mm aufweist.

8. Aufbau nach einem der vorhergehenden Ansprüche,
**dadurch gekennzeichnet,**
- **daß** die Anlagefläche (14') des Andruckabschnitts (12.4, 12.4') strukturiert ist.

9. Aufbau nach einem der vorhergehenden Ansprüche,
**dadurch gekennzeichnet,**
- **daß** am Andrucksabschnitt (12.4, 12.4') über die Anlagefläche (14') vorstehende Verhakungsorgane (13.1', 13.2') ausgebildet sind.

10. Aufbau nach einem der vorhergehenden Ansprüche,
**dadurch gekennzeichnet,**
- **daß** das Kontaktfederelement (12, 12') aus einer Kupfer-Zinn-Legierung, insbesondere CuSn6, oder einer Kupfer-Zinn-Nickel-Legierung, insbesondere CuNi9Sn2, gebildet ist.

## Claims

1. Construction for electrical contacting of an electrical valve (1), particularly a shift or pressure control valve for the automatic transmission of motor vehicles, with an electrical wiring element (9), whereby
- the electrical valve (1) is fitted with at least one contact spring element (12, 12') arranged outside the valve housing (2), that in the mounted state applies spring pressure to an exposed mating contact element of the wiring element (9), and
- the contact spring element (12, 12') has a pressure section (12.4, 12.4') with a rounded contact face (14'),
**characterised in that**
- the pressure section (12.4, 12.4') has a tinned contact face (14'), and
- the mating contact element has a tinned mating contact face.

2. Construction according to Claim 1, **characterised in that**
- the pressure section (12.4, 12.4') of the contact spring element (12, 12') is of curved shape.

3. Construction according to Claim 1 or 2, **characterised in that**
- the contact spring element (12, 12') has an S-shaped section.

4. Construction according to one of the preceding claims, **characterised in that**
- the wiring element is a flexible circuit board (9).

5. Construction according to one of the preceding claims, **characterised in that**
- the rounded contact face (14') has a radius of approximately 1.2 to 1.7 mm.

6. Construction according to one of the preceding claims, **characterised in that**
- the spring force exerted on the mating contact element is between 12 and 15 N.

7. Construction according to one of Claims 2 to 5, **characterised in that**
- the pressure section (12.4, 12.4') has a width of approximately 3 to 5 mm measured parallel to the axis of the curve.

8. Construction according to one of the preceding claims, **characterised in that**
- the mating face (14') of the pressure section (12.4, 12.4') is textured.

9. Construction according to one of the preceding claims, **characterised in that**
- on the pressure section (12.4, 12.4') hooking elements (13.1', 13.2') are formed that project over the contact face (14').

10. Construction according to one of the preceding claims, **characterised in that**
- the contact spring element (12, 12') is formed from a copper-tin alloy, particularly CuSn6, or a copper-tin-nickel alloy, particularly CuNi9Sn2.

## Revendications

1. Ensemble pour la mise en contact électrique d'une valve électrique (1), en particulier d'une valve de commutation ou de régulation de pression pour boîte automatiques de véhicules à moteur, comportant un élément de câblage (9), dans lequel
- la valve électrique (1) est équipée d'au moins un élément de ressort de contact (12, 12') extérieur au corps de valve (2) et s'appuyant, à l'état monté et sous l'effet de force de ressort, sur un élément de contact opposé s'étendant librement de l'élément de câblage (9), et s'étendant
- l'élément de ressort de contact (12, 12') comprend une section d'appui (12.4, 12.4') ayant une surface d'appui courbe (14'),
**caractérisé en ce**
- **que** la section d'appui (12.4,12.4') comprend une surface d'appui (14') étamée, et
- **que** l'élément de contact opposé comprend une surface d'appui opposée étamée.

2. Ensemble selon la revendication 1, **caractérisé en ce que** la section d'appui (12.4, 12.4') de l'élément de ressort de contact (12, 12') a une forme arquée.

3. Ensemble selon la revendication 1 ou 2, **caractérisé en ce que** l'élément de ressort de contact (12, 12') comprend une section en forme de S.

4. Ensemble selon l'une quelconque des revendications précédentes, **caractérisé en ce que** l'élément de câblage est une plaque de circuit imprimé flexible (9).

5. Ensemble selon l'une quelconque des revendications précédentes, **caractérisé en ce que** la surface d'appui courbe (14') comprend un rayon compris entre environ 1,2 et 1,7 mm.

6. Ensemble selon l'une quelconque des revendications précédentes, **caractérisé en ce que** la force de ressort appliquée sur l'élément de contact opposé est comprise entre 12 et 15 N.

7. Ensemble selon l'une quelconque des revendications 2 à 5, **caractérisé en ce que** la section d'appui (12.4, 12.4') comprend une largeur d'environ 3 à 5 mm, mesurée parallèlement à l'axe de l'arc.

8. Ensemble selon l'une quelconque des revendications précédentes, **caractérisé en ce que** la surface d'appui (14') de la section d'appui (12.4, 12.4') est structurée.

9. Ensemble selon l'une quelconque des revendications précédentes, **caractérisé en ce que** la section d'appui (12.4, 12.4') comporte des organes d'accrochage (13.1', 13.2') en saillie par rapport à la surface d'appui (14').

10. Ensemble selon l'une quelconque des revendications précédentes, **caractérisé en ce que** l'élément de ressort de contact (12, 12') est formé à partir d'un alliage de cuivre et d'étain, en particulier de CuSn₆, ou d'un alliage de cuivre, d'étain et de nickel, en particulier de CuNi₉Sn₂.
